# EUROPÄISCHE PATENTANMELDUNG

(11) **EP 1 606 999 A1**
(43) Veröffentlichungstag der Anmeldung: **21.12.2005**
(21) Anmeldenummer: 04014307.5
(22) Anmeldetag: 18.06.2004
(51) Int. Cl.: A01N 55/00, A01N 55/10, A01N 47/38, A01N 43/653, A01N 43/60, A01N 43/54, A01N 43/50, A01N 43/40

(54) **Saatgutbehandlungsmittel für Soja**

(71) Anmelder: Bayer CropScience AG, 40789 Monheim (DE)
(72) Erfinder: Kemper, Dr. Konrad, 34439 Willebadessen (DE); Häuser-Hahn, Dr. Isolde, 51375 Leverkusen (DE); Reinecke, Dr. Paul, 51379 Leverkusen (DE)

(57) **Zusammenfassung**

Die Verwendung eines oder mehrerer Demethylierungsinhibitor Fungizide aus der Gruppe:
- a): Triazole:
a.1. Azaconazole, a.2. Bitertanol, a.3. Bromuconazole, a.4. Cyproconazole, a.5. Difenoconazole, a.6. Diniconazole, a.7. Epoxiconazole, a.8. Fenbuconazole, a.9. Fluquinconazole, a.10. Flusilazole, a.11. Flutriafol, a.12. Hexaconazole, a.13. Imibenconazole, a.14. Ipconazole, a.15. Meteonazole, a.16. Myclobutanil, a.17. Paclebutrazol, a.18. Penconazole, a.19. Propiconazole, a.20. Prothioconazole, a.21. Simeconazole, a.22. Tebuconazole, a.23. Tetraconazole, a.24. Triadimefon, a.25. Triadimonol, a.26. Triticonazole;
- b): Pyrimidine:
b.1. Fenarimol, b.2. Nuarimol;
- c): Pyridine:
c.1. Pyrifenox;
- d): Piperazine:
d.1. Triforine
und
- e): Imidazole:
e.1. Imazalil, e.2. Oxpoconazole Fumarat, e.3. Peforazoate, e.4. Prochloraz, e.5. Triflumizole,
als Saatgutbeize für Soja gegen Sojabohnenrost.

## Beschreibung

Die Erfindung betrifft die Verwendung von Fungiziden, die als Sterolbiosynthese-Hemmstoffe wirken, als Saatbeizmittel, ein Verfahren zum Bekämpfen phytopathogener Pilze durch Behandlung von Saatgut mit diesen Fungiziden, sowie Saatgut, welches mit solchen Fungiziden behandelt wurde.

Hemmstoffe der Sterolbiosynthese in Pilzen, welche die Demethylierung an Position 14 innerhalb der Ergosteroidbiosynthese blockieren (Demethylierungsinhibitoren, (DMI), haben als Fungizide große praktische Bedeutung erlangt (siehe z.B. C.D.S. Tomlin (Hrgg.), The Pesticide Manual, 13. Auflage, The British Crop Protection Council, Famham 2003).

Einzelne dieser Fungizide sind bereits als Beizmittel für Saatgut unter anderem auch von Soja bekannt (siehe z.B. WO-A 03/09 90 10, Fitopatologia Brasileira (1998) 23(2) 127-131).

Da sich aber die ökologischen und ökonomischen Anforderungen an moderne Fungizide laufend erhöhen, beispielsweise was Wirkspektrum, Toxizität, Selektivität, Aufwandmenge, Rückstandsbildung und günstige Herstellbarkeit angeht, und außerdem z.B. Probleme mit Resistenzen auftreten können, besteht die ständige Aufgabe, neue Fungizide zu entwickeln, die zumindest in Teilbereichen Vorteile gegenüber den bekannten aufweisen.

Es wurde nun überraschend gefunden, dass Fungizide aus der Gruppe der DMI als Beizmittel für Sojasaatgut eine besonders gute Wirkung gegen Sojabohnenrost (Phakopsora, insbesondere Phakopsora pachyrhizi) zeigen.

Gegenstand der Erfindung ist daher die Verwendung eines oder mehrerer DMI-Fungizide aus der Gruppe:
a) Triazole:
   a.1. Azaconazole, a.2. Bitertanol, a.3. Bromuconazole, a.4. Cyproconazole, a.5. Difenoconazole, a.6. Diniconazole, a.7. Epoxiconazole, a.8. Fenbuconazole, a.9. Fluquinconazole, a.10. Flusilazole, a.11. Flutriafol, a.12. Hexaconazole, a.13. Imibenconazole, a.14. Ipconazole, a.15. Metconazole, a.16. Myclobutanil, a.17. Paclebutrazol, a.18. Penconazole, a.19. Propiconazole, a.20. Prothioconazole, a.21. Simeconazole, a.22. Tebuconazole, a.23. Tetraconazole, a.25. Triadimefon, a.26. Triadimenol, a.27. Triticonazole;
b) Pyrimidine:
   b.1. Fenarimol, b.2. Nuarimol;
c) Pyridine:
   c.1. Pyrifenox;
d) Piperazine:
   d.1. Triforine
   und
e) Imidazole:
   e.1. Imazalil, e.2. Oxpoconazole Fumarat, e.3. Peforazoate, e.4. Prochloraz, e.5. Triflumizole,
als Saatgutbeize für Soja gegen Sojabohnenrost.

Weiterhin Gegenstand der Erfindung ist ein Verfahren zum Schutz von Sojapflanzen gegen Sojabohnenrost, wobei man Saatgut den Pflanzen mit einem oder mehreren DMI-Fungiziden aus der Gruppe a - e behandelt.

Die genannten DMI-Fungizide sind überwiegend noch nicht zur Beize von Sojasaatgut verwendet worden.

Gegenstand der Erfindung ist daher auch die Verwendung eines oder mehrerer DMI-Fungizide aus der Gruppe:
a) Triazole:
   a.1 Azaconazole, a.2. Bitertanol, a.3. Bromuconazole, a.4. Cyproconazole, a.6. Diniconazole, a.7. Epoxiconazole, a.8. Fenbuconazole, a.9. Fluquinconazole, a.10. Flusilazole, a.11. Flutriafol, a.12. Hexaconazole, a.13. Imibenconazole, a.14. Ipconazole, a.15. Meconazole, a.16. Myclobutanil, a.17. Paclebutrazol, a.18. Penconazole, a.19. Propiconazole, a.20. Prothioconazole, a.21. Simeconazole, a.22. Tebuconazole, a.25. Triadimefon, a.26. Triadimenol, a.27. Triticonazole;
b) Pyrimidine:
   b.1.Fenarimol, b.2.Nuarimol;
c) Pyridine:
   c.1. Pyrifenox;
d) Piperazine:
   d.1. Triforine
   und
e) Imidazole:
   e.1. Imazalil, e.2. Oxpoconazole Fumarat, E.3. Peforazoate, e.4. Prochloraz, e.5. Triflumizole,
   zur Saatgutbeizung von Soja.

Weiterhin Gegenstand der Erfindung ist ein Verfahren zum Schutz von Sojapflanzen gegen phytopathogene Pilze, wobei man Saatgut den Pflanzen mit einem oder mehreren DMI-Fungiziden aus der Gruppe
a) Triazole:
   a.1. Azaconazole, a.2. Bitertanol, a.3. Bromuconazole, a.4. Cyproconazole, a.6. Diniconazole, a.7. Epoxiconazole, a.8. Fenbuconazole, a.9. Fluquinconazole, a.10. Flusilazole, a.11. Flutriafol, a.12. Hexaconazole, a. 13. Imibenconazole, a.14. Ipconazole, a.15. Metconazole, a.16. Myclobutanil, a.17. Paclebutrazol, a.18. Penconazole. A.19. Propiconazole, a.20. Prothioconazole, a.21. Simeconazole, a.22. Tebuconazole, a.25. Triadimefon. a.26.Triadimenol, a.27 Triticonazole;
b) Pyrimidine:
   b.1. Fenarimol, b.2. Nuarimol;
c) Pyridine:
   c.1. Pyrifenox;
d) Piperazine
   d.1. Triforine
   und
e) Imidazole
   e.1. Imazalil, e.2. Oxpoconazole Fumarat, e.3. Peforazoate, e.4. Prochloraz, e.5. Triflumizole,
   behandelt.

Ebenso Gegenstand der Erfindung ist Sojasaatgut, behandelt und/oder beschichtet mit einem oder mehreren DMI-Funigiziden aus der Gruppe
a) Triazole:
   a.1. Azaconazole, a.2. Bitertanol, a.3. Bromuconazole, a.4. Cyproconazole, a.5. Difenoconazole, a.6. Diniconazole, a.7. Epoxiconazole, a.8. Fenbuconazole, a.9. Fluquinconazole, a.10. Flusilazole, a.11. Flutriafol, a.12. Hexaconazole, a.13. Imibenconazole, a.14. Ipconazole, a.15. Metconazole, a.16. Myclobutanil, a.17. Paclebutrazol, a.18. Penconazole, a.19. Propiconazole, a.20. Prothioconazole, a.21. Simeconazole, a.22. Tebuconazole, a.23. Tetraconazole, a.25. Triadimefon, a.27. Triticonazole;
b) Pyrimidine:
   b.1. Fenarimol, b.2. Nuarimol;
c) Pyridine:
   c.1. Pyrifenox;
d) Piperazine:
   d.1. Triforine
   und
e) Imidazole:
   e.1. Imazalil, e.2. Oxpoconazole Fumarat, e.3. Peforazoate, e.4. Prochloraz, e.5. Triflumizole.

Überraschenderweise ist die erfindungsgemäße Beize gegen Sojabohnensaat besonders wirksam, obwohl diese besonders agressive Pflanzenkrankheit nicht boden- sondern windbürtig ist.

Die erfindungsgemäße Beize ermöglicht zudem eine ökonomisch und ökologisch vorteilhafte Bekämpfung von Pilzkrankheiten in Soja und führt auch zu einer Verbesserung der Pflanzengesundheit und -vitalität.

Die DMI-Fungizide der Gruppe a - e sind bekannt und kommerziell erhältlich. Einzelheiten zu den einzelnen Stoffen und deren Bezug finden sich in "The Pesticide Manual", 13. Auflage.

Bevorzugt sind die DMI-Fungizide der Gruppe a sowie Prochloraz aus der Gruppe e.

Besonders bevorzugt sind Fluquinconazole, Prothioconazole, Tebuconazole, Triticonazole, Metconazole, Cyproconazole, Bitertanol, Triadimefon und Triadimenol.

Insbesondere bevorzugt sind Fluquinconazole, Prothioconazole und Triticonazole.

Weiterhin bevorzugt ist es, Mischungen von zwei oder mehreren, insbesondere einer der genannten DMI-Fungizide zu verwenden.

Besonders bevorzugt sind die Mischungen der Verbindungen Fluquinconazole und Prothioconazole.

In den genannten Mischungen von zwei Wirkstoffen beträgt das Gewichtsverhältnis der jeweiligen DMI-Fungizide im Allgemeinen 1:0,01-100, vorzugsweise 1:0,2-20, besonders bevorzugt 1:0,1-10.

Die erfindungsgemäß verwendeten DMI-Fungizide können als solche oder in ihren Formulierungen auch in Mischung mit weiteren bekannten Fungiziden, Bakteriziden, Akariziden, Nematiziden oder Insektiziden verwendet werden, um so z.B. das Wirkungsspektrum zu verbreitern oder Resistenzentwicklungen vorzubeugen. In vielen Fällen erhält man dabei synergistische Effekte, d.h. die Wirksamkeit der Mischung ist größer als die Wirksamkeit der Einzelkomponenten.

### Als Mischpartner kommen zum Beispiel folgende Verbindungen infrage:

### Fungizide:

2-Phenylphenol; 8-Hydroxyquinoline sulfate; Acibenzolar-S-methyl; Actinovate; Aldimorph; Amidoflumet; Ampropylfos; Ampropylfos-potassium; Andoprim; Anilazine; Azoxystrobin; Benalaxyl; Benodanil; Benomyl; Benthiavalicarb-isopropyl; Benzamacril; Benzamacril-isobutyl; Bilanafos; Binapacryl; Biphenyl; Blasticidin-S; Boscalid; Bupirimate; Buthiobate; Butylamine; Calcium polysulfide; Capsimycin; Captafol; Captan; Carbendazim; Carboxin; Carpropamid; Carvone; Chinomethionat; Chlobenthiazone; Chlorfenazole; Chloroneb; Chlorothalonil; Chlozolinate; cis-1-(4-chlorophenyl)-2-(1H-1,2,4-triazole-1-yl)-cycloheptanol; Clozylacon; Cyazofamid; Cyflufenamid; Cymoxanil; Cyprodinil; Cyprofuram; Dagger G; Debacarb; Dichlofluanid; Dichlone; Dichlorophen; Diclocymet; Diclomezine; Dicloran; Diethofencarb; Diflumetorim; Dimethirimol; Dimethomorph; Dimoxystrobin; Dinocap; Diphenylamine; Dipyrithione; Ditalimfos; Dithianon; Dodine; Drazoxolon; Edifenphos; Ethaboxam; Ethirimol; Etridiazole; Famoxadone; Fenamidone; Fenapanil; Fenfuram; Fenhexamid; Fenitropan; Fenoxanil; Fenpiclonil; Fenpropidin; Fenpropimorph; Ferbam; Fluazinam; Flubenzimine; Fludioxonil; Flumetover; Flumorph; Fluoromide; Fluoxastrobin; Flurprimidol; Flusulfamide; Flutolanil; Folpet; Fosetyl-Al; Fosetyl-sodium; Fuberidazole; Furalaxyl; Furametpyr; Furcarbanil; Furmecyclox; Guazatine; Hexachlorobenzene; Hymexazol; Iminoctadine triacetate; Iminoctadine tris(albesilate); Iodocarb; Iprobenfos; Iprodione; Iprovalicarb; Irumamycin; Isoprothiolane; Isovaledione; Kasugamycin; Kresoxim-methyl; Mancozeb; Maneb; Meferimzone; Mepanipyrim; Mepronil; Metalaxyl; Metalaxyl-M; Methasulfocarb; Methfuroxam; Methyl-1-(2,3-dihydro-2,2-dimethyl-1H-inden-1-yl)-1H-imidazole-5-carboxylate; Methyl-2-[[[cyclopropyl[(4-methoxyphenyl)imino]-methyl]thio]methyl]-.alpha.-(methoxymethylene)-benzeneacetate; Methyl-2-[2-[3-(4-chloro-phenyl)-1-methyl-allylideneaminooxymethyl]-phenyl]-3-methoxy-acrylate; Metiram; Metominostrobin; Metrafenone; Metsulfovax; Mildiomycin; monopotassium carbonate; Myclozolin; N-(3-Ethyl-3,5,5-trimethyl-cyclohexyl)-3-formylamino-2-hydroxy-benzamide; N-(6-methoxy-3-pyridinyl)-cyclopropanecarboxamide; N-butyl-8-(1,1-dimethylethyl)-1-oxaspiro[4.5]decan-3-amine; Natamycin; Nitrothal-isopropyl; Noviflumuron; Ofurace; Orysastrobin; Oxadixyl; Oxolinic acid; Oxycarboxin; Oxyfenthiin; Pencycuron; Penthiopyrad; Phosdiphen; Phthalide; Picobenzamid; Picoxystrobin; Piperalin; Polyoxins; Polyoxorim; Procymidone; Propamocarb; Propanosine-sodium; Propineb; Proquinazid; Pyraclostrobin; Pyrazophos; Pyrimethanil; Pyroquilon; Pyroxyfur; Pyrrolnitrine; Quinconazole; Quinoxyfen; Quintozene; Silthiofam; Sodium tetrathiocarbonate; Spiroxamine; Sulfur; Tecloftalam; Tecnazene; Tetcyclacis; Thicyofen; Thifluzamide; Thiophanate-methyl; Thiram; Tiadinil; Tioxymid; Tolclofos-methyl; Tolylfluanid; Triazbutil; Triazoxide; Tricyclamide; Tricyclazole; Tridemorph; Trifloxystrobin; Validamycin A; Vinclozolin; Zineb; Ziram; Zoxamide; (2S)-N-[2-[4-[[3-(4-chlorophenyl)-2-propynyl]oxy]-3-methoxyphenyl]ethyl]-3-methyl- 2-[(methylsulfonyl)amino]-butanamide; 1-(1-naphthalenyl)-1H-pyrrole-2,5-dione; 2,3,5,6-tetrachloro-4-(methylsulfonyl)-pyridine; 2,4-Dihydro-5-methoxy-2-methyl-4-[[[[1-[3-(trifluoromethyl)-phenyl]-ethylidene]-amino]-oxy]-methyl]-phenyl]-3H-1,2,3-triazol-3-one; 2-amino-4-methyl-N-phenyl-5-thiazolecarboxamide; 2-chloro-N-(2,3-dihydro-1,1,3-trimethyl-1H-inden-4-yl)-3-pyridincarboxamide; 3,4,5-trichloro-2,6-pyridinedicarbonitrile; 3-[(3-Bromo-6-fluoro-2-methyl-1H-indol-1-yl)-sulfonyl]-N,N-dimethyl-1H-1,2,4-triazole-1-sulfonamide;
sowie Kupfersalze und -zubereitungen, wie Bordeaux mixture; Kupfer Hydroxin; Kupfer naphthenat; Kupfer Oxychlorid; Kupfer Sulfat; Cufraneb; Kupferoxid; Mancopper; Oxine-copper:

### Bakterizide:

Bronopol, Dichlorophen, Nitrapyrin, Nickel-dimethyldithiocarbamat, Kasugamycin, Octhilinon, Furancarbonsäure, Oxytetracyclin, Probenazol, Streptomycin, Tecloftalam, Kupfersulfat und andere Kupfer-Zubereitungen.

### Insektizide / Akarizide / Nematizide:

Abamectin, ABG-9008, Acephate, Acequinocyl, Acetamiprid, Acetoprole, Acrinathrin, AKD-1022, AKD-3059, AKD-3088, Alanycarb, Aldicarb, Aldoxycarb, Allethrin, Allethrin 1R-isomers, Alpha-Cypermethrin (Alphamethrin), Amidoflumet, Aminocarb, Amitraz, Avermectin, AZ-60541, Azadirachtin, Azamethiphos, Azinphos-methyl, Azinphos-ethyl, Azocyclotin,

Bacillus popilliae, Bacillus sphaericus, Bacillus subtilis, Bacillus thuringiensis, Bacillus thuringiensis strain EG-2348, Bacillus thuringiensis strain GC-91, Bacillus thuringiensis strain NCTC-11821, Baculoviren, Beauveria bassiana, Beauveria tenella, Bendiocarb, Benfuracarb, Bensultap, Benzoximate, Beta-Cyfluthrin, Beta-Cypermethrin, Bifenazate, Bifenthrin, Binapacryl, Bioallethrin, Bioallethrin-S-cyclopentyl-isomer, Bioethanomethrin, Biopermethrin, Bioresmethrin, Bistrifluron, BPMC, Brofenprox, Bromophos-ethyl, Bromopropylate, Bromfenvinfos (-methyl), BTG-504, BTG-505, Bufencarb, Buprofezin, Butathiofos, Butocarboxim, Butoxycarboxim, Butylpyridaben,

Cadusafos, Camphechlor, Carbaryl, Carbofuran, Carbophenothion, Carbosulfan, Cartap, CGA-50439, Chinomethionat, Chlordane, Chlordimeform, Chloethocarb, Chlorethoxyfos, Chlorfenapyr, Chlorfenvinphos, Chlorfluazuron, Chlormephos, Chlorobenzilate, Chloropicrin, Chlorproxyfen, Chlorpyrifos-methyl, Chlorpyrifos (-ethyl), Chlovaporthrin, Chromafenozide, Cis-Cypermethrin, Cis-Resmethrin, Cis-Permethrin, Clocythrin, Cloethocarb, Clofentezine, Clothianidin, Clothiazoben, Codlemone, Coumaphos, Cyanofenphos, Cyanophos, Cycloprene, Cycloprothrin, Cydia pomonella, Cyfluthrin, Cyhalothrin, Cyhexatin, Cypermethrin, Cyphenothrin (1R-trans-isomer), Cyromazine,

DDT, Deltamethrin, Demeton-S-methyl, Demeton-S-methylsulphon, Diafenthiuron, Dialifos, Diazinon, Dichlofenthion, Dichlorvos, Dicofol, Dicrotophos, Dicyclanil, Diflubenzuron, Dimethoate, Dimethylvinphos, Dinobuton, Dinocap, Dinotefuran, Diofenolan, Disulfoton, Docusat-sodium, Dofenapyn, DOWCO-439,

Eflusilanate, Emamectin, Emamectin-benzoate, Empenthrin (1R-isomer), Endosulfan, Entomopthora spp., EPN, Esfenvalerate, Ethiofencarb, Ethiprole, Ethion, Ethoprophos, Etofenprox, Etoxazole, Etrimfos,
Famphur, Fenamiphos, Fenazaquin, Fenbutatin oxide, Fenfluthrin, Fenitrothion, Fenobucarb, Fenothiocarb, Fenoxacrim, Fenoxycarb, Fenpropathrin, Fenpyrad, Fenpyrithrin, Fenpyroximate, Fensulfothion, Fenthion, Fentrifanil, Fenvalerate, Fipronil, Flonicamid, Fluacrypyrim, Fluazuron, Flubenzimine, Flubrocythrinate, Flucycloxuron, Flucythrinate, Flufenerim, Flufenoxuron, Flufenprox, Flumethrin, Flupyrazofos, Flutenzin (Flufenzine), Fluvalinate, Fonofos, Formetanate, Formothion, Fosmethilan, Fosthiazate, Fubfenprox (Fluproxyfen), Furathiocarb,
Gamma-HCH, Gossyplure, Grandlure, Granuloseviren,
Halfenprox, Halofenozide, HCH, HCN-801, Heptenophos, Hexaflumuron, Hexythiazox, Hydramethylnone, Hydroprene,
IKA-2002, Imidacloprid, Imiprothrin, Indoxacarb, Iodofenphos, Iprobenfos, Isazofos, Isofenphos, Isoprocarb, Isoxathion, Ivermectin,
Japonilure,
Kadethrin, Kempolyederviren, Kinoprene,
Lambda-Cyhalothrin, Lindane, Lufenuron,
Malathion, Mecarbam, Mesulfenfos, Metaldehyd, Metam-sodium, Methacrifos, Methamidophos, Metharhizium anisopliae, Metharhizium flavoviride, Methidathion, Methiocarb, Methomyl, Methoprene, Methoxychlor, Methoxyfenozide, Metolcarb, Metoxadiazone, Mevinphos, Milbemectin, Milbemycin, MKI-245, MON-45700, Monocrotophos, Moxidectin, MTI-800,
Naled, NC-104, NC-170, NC-184, NC-194, NC-196, Niclosamide, Nicotine, Nitenpyram, Nithiazine, NNI-0001, NNI-0101, NNI-0250, NNI-9768, Novaluron, Noviflumuron,
OK-5101, OK-5201, OK-9601, OK-9602, OK-9701, OK-9802, Omethoate, Oxamyl, Oxydemetonmethyl,
Paecilomyces fumosoroseus, Parathion-methyl, Parathion (-ethyl), Permethrin (cis-, trans-), Petroleum, PH-6045, Phenothrin (1R-trans isomer), Phenthoate, Phorate, Phosalone, Phosmet, Phosphamidon, Phosphocarb, Phoxim, Piperonyl butoxide, Pirimicarb, Pirimiphos-methyl, Pirimiphos-ethyl, Prallethrin, Profenofos, Promecarb, Propaphos, Propargite, Propetamphos, Propoxur, Prothiofos, Prothoate, Protrifenbute, Pymetrozine, Pyraclofos, Pyresmethrin, Pyrethrum, Pyridaben, Pyridalyl, Pyridaphenthion, Pyridathion, Pyrimidifen, Pyriproxyfen,
Quinalphos,
Resmethrin, RH-5849, Ribavirin, RU-12457, RU-15525,
S-421, S-1833, Salithion, Sebufos, SI-0009, Silafluofen, Spinosad, Spirodiclofen, Spiromesifen, Sulfluramid, Sulfotep, Sulprofos, SZI-121,
Tau-Fluvalinate, Tebufenozide, Tebufenpyrad, Tebupirimfos, Teflubenzuron, Tefluthrin, Temephos, Temivinphos, Terbam, Terbufos, Tetrachlorvinphos, Tetradifon, Tetramethrin, Tetramethrin (1R-isomer), Tetrasul, Theta-Cypermethrin, Thiacloprid, Thiamethoxam, Thiapronil, Thiatriphos, Thiocyclam hydrogen oxalate, Thiodicarb, Thiofanox, Thiometon, Thiosultap-sodium, Thuringiensin, Tolfenpyrad, Tralocythrin, Tralomethrin, Transfluthrin, Triarathene, Triazamate, Triazophos, Triazuron, Trichlophenidine, Trichlorfon, Triflumuron, Trimethacarb,
Vamidothion, Vaniliprole, Verbutin, Verticillium lecanii,
WL-108477, WL-40027,
YI-5201, YI-5301, YI-5302,
XMC, Xylylcarb,
ZA-3274, Zeta-Cypermethrin, Zolaprofos, ZXI-8901,
die Verbindung 3-Methyl-phenyl-propylcarbamat (Tsumacide Z),
die Verbindung 3-(5-Chlor-3-pyridinyl)-8-(2,2,2-trifluorethyl)-8-azabicyclo[3.2.1]octan-3-carbonitril (CAS-Reg.-Nr. 185982-80-3) und das entsprechende 3-endo-Isomere (CAS-Reg.-Nr. 185984-60-5) (vgl. WO-96/37494, WO-98/25923),
sowie Präparate, welche insektizid wirksame Pflanzenextrakte, Nematoden, Pilze oder Viren enthalten.
Auch eine Mischung mit anderen bekannten Wirkstoffen, wie Herbiziden, oder mit Düngemitteln und Wachstumsregulatoren, Safenem bzw. Semiochemicals ist möglich.

Bevorzugt sind Mischungen der genannten Triazole, insbesondere Fluquinconazole, Triticonazole und Prothioconazole mit Tolylfluanid oder Strobilurinen, insbesondere Fluoxastrobin, Trifloxystrobin, Azoxylstrobin und Pyraclostrobin.

### Besonders bevorzugt sind die Mischungen

Fluquinconazole/Tolylfluanid, Fluquinconazole/Fluoxastrobin, Fluquinconazole/Trifluxystrobin, Fluquinconazole/Azoxylstrobin, Fluquinconazole/Pyraclostrobin, Prothioconazole/Tolylfluanid, Prothioconazole/Fluoxastrobin, Prothioconazole/Trifloxystrobin, Prothioconazole/Azoxystrobin und Prothioconazole/Pyraclostrobin.

### Bevorzugt sind die o.g. Gewichtsverhältnisse.

Die DMI-Fungizide werden erfindungsgemäß in die üblichen Beizmittel-Formulierungen überführt, wie Lösungen, Emulsionen, Suspensionen, Pulver, Schäume, Slurries oder andere Hüllmassen für Saatgut, sowie ULV-Formulierungen.

Trockenbeizen (vorzugsweise unter Zusatz von Haftvermittlern, wie z.B. Paraffinöl oder Talkum) und gegebenenfalls Farbstoffen,
Schlämmbeizen (vorzugsweise unter Zusatz von Netzmitteln, Dispergiermitteln, Emulgatoren, Klebern, inerten Füllstoffen und Farbstoffen),
Wässrige Flüssigbeizen (vorzugsweise unter Zusatz von Emulgatoren, Dispergiermitteln, Verdickungsmitteln, Frostschutzmitteln, Polymeren, Klebern und Farbstoffen),
Lösungsmittelhaltige Flüssigbeizen (unter Zusatz von Lösungsmitteln und Farbstoffen),
Emulsionsbeizen (unter Zusatz von Emulgatoren, Lösungsmitteln und Farbstoffen).

Diese Formulierungen werden in bekannter Weise hergestellt, indem man die Wirkstoffe oder Wirkstoffkombinationen mit üblichen Zusatzstoffen vermischt, wie zum Beispiel übliche Streckmittel sowie Lösungs- oder Verdünnungsmittel, Farbstoffe, Netzmittel, Dispergiermittel, Emulgatoren, Entschäumer, Konservierungsmittel, sekundäre Verdickungsmittel, Kleber, Gibberelline und auch Wasser.

Als Farbstoffe, die in den erfindungsgemäß verwendbaren Beizmittel-Formulierungen enthalten sein können, kommen alle für derartige Zwecke üblichen Farbstoffe in Betracht. Dabei sind sowohl in Wasser wenig lösliche Pigmente als auch in Wasser lösliche Farbstoffe verwendbar. Als Beispiele genannt seien die unter den Bezeichnungen Rhodamin B, C.I. Pigment Red 112 und C.I. Solvent Red 1 bekannten Farbstoffe.

Als Netzmittel, die in den erfindungsgemäß verwendbaren Beizmittel-Formulierungen enthalten sein können, kommen alle zur Formulierung von agrochemischen Wirkstoffen üblichen, die Benetzung fördernden Stoffe in Frage. Vorzugsweise verwendbar sind Alkylnaphthalin-Sulfonate, wie Diisopropyl- oder Diisobutyl-naphthalin-Sulfonate.

Als Dispergiermittel und/oder Emulgatoren, die in den erfindungsgemäß verwendbaren Beizmittel-Formulierungen enthalten sein können, kommen alle zur Formulierung von agrochemischen Wirkstoffen üblichen nichtionischen, anionischen und kationischen Dispergiermittel in Betracht. Vorzugsweise verwendbar sind nichtionische oder anionische Dispergiermittel oder Gemische von nichtionischen oder anionischen Dispergiermitteln. Als geeignete nichtionische Dispergiermittel sind insbesondere Ethylenoxid-Propylenoxid Blockpolymere, Alkylphenolpolyglykolether sowie Tristryrylphenolpolyglykolether und deren phosphatierte oder sulfatierte Derivate zu nennen. Geeignete anionische Dispergiermittel sind insbesondere Ligninsulfonate, Polyacrylsäuresalze und Arylsulfonat-Formaldehydkondensate.

Als Entschäumer können in den erfindungsgemäß verwendbaren Beizmittel-Formulierungen alle zur Formulierung von agrochemischen Wirkstoffen üblichen schaumhemmenden Stoffe enthalten sein. Vorzugsweise verwendbar sind Silikonentschäumer und Magnesiumstearat.

Als Konservierungsmittel können in den erfindungsgemäß verwendbaren Beizmittel-Formulierungen alle für derartige Zwecke in agrochemischen Mitteln einsetzbaren Stoffe vorhanden sein. Beispielhaft genannt seien Dichlorophen und Benzylalkoholhemiformal.

Als sekundäre Verdickungsmittel, die in den erfindungsgemäß verwendbaren Beizmittel-Formulierungen enthalten sein können, kommen alle für derartige Zwecke in agrochemischen Mitteln einsetzbaren Stoffe in Frage. Vorzugsweise in Betracht kommen Cellulosederivate, Acrylsäurederivate, Xanthan, modifizierte Tone und hochdisperse Kieselsäure.

Als Lösungsmittel, die mit den DMI-Fungiziden kombiniert werden können, kommen alle in agrochemischen Mitteln einsetzbaren organischen Solventien in Betracht. Vorzugsweise in Frage kommen Ketone, wie Methylisobutylketon und Cyclohexanon, ferner Amide, wie Dimethylformamid, weiterhin cyclische Verbindungen, wie N-Methyl-pyrrolidon, N-Octyl-pyrrolidon, N-Dodecyl-pyrrolidon, N-Octyl-caprolactam, N-Dodecyl-caprolactam und (-Butyrolacton, darüber hinaus stark polare Solventien, wie Dimethylsulfoxid, ferner aromatische Kohlenwasserstoffe, wie Xylol, außerdem Ester, wie Propylenglykol-monomethylether-acetat, Adipinsäure-dibutylester, Essigsäure-hexylester, Essigsäure-heptylester, Zitronensäure-tri-n-butylester, Phthalsäure-diethylester und Phthalsäure-di-n-butylester, und weiterhin Alkohole, wie Ethanol, n- und i-Propanol, n- und i-Butanol, n- und i-Amylalkohol, Benzylalkohol und 1-Methoxy-2-propanol.

Als polymere Zumischkomponenten kommen übliche biologisch abbaubare, natürliche und synthetische Stoffe in Betracht. Vorzugsweise in Frage kommen Polyester, Polyetherester, Copolyester, Polyanhydride, Polyesterurethane, thermoplastische Polysaccharide oder Polysaccharid-Derivate, und auch Polyester, Polyetherester und Polyesteramide, die aliphatische und aromatische Estergruppierungen enthalten.

Als Kleber, die in den erfindungsgemäß verwendbaren Beizmittel-Formulierungen enthalten sein können, kommen alle üblichen in Beizmitteln einsetzbaren Bindemittel in Frage. Vorzugsweise genannt seien Polyvinylpyrrolidon, Polyvinylacetat, Polyvinylalkohol und Tylose.

Als Gibberelline, die in den erfindungsgemäß verwendbaren Beizmittel-Formulierungen enthalten sein können, kommen vorzugsweise Stoffe der Formel 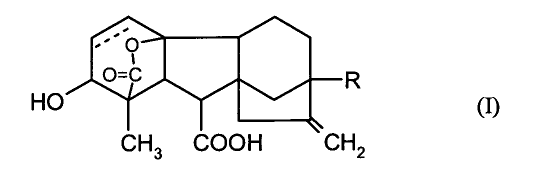 in welcher
- R: für ein Wasserstoffatom oder eine Hydroxygruppe steht und
die gestrichelte Linie andeutet, dass an der Stelle des Ringes entweder eine C-C-Einfachbindung oder eine C=C-Doppelbindung enthalten ist,
in Betracht.

Als Beispiele für Gibberelline der Formel (I) seien genannt: 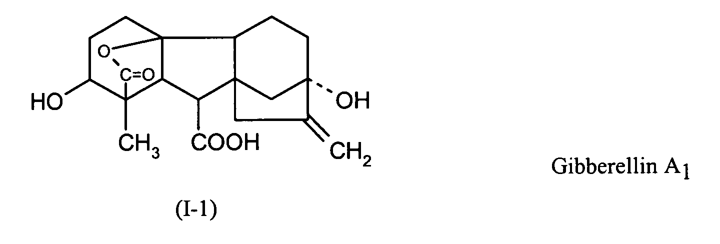 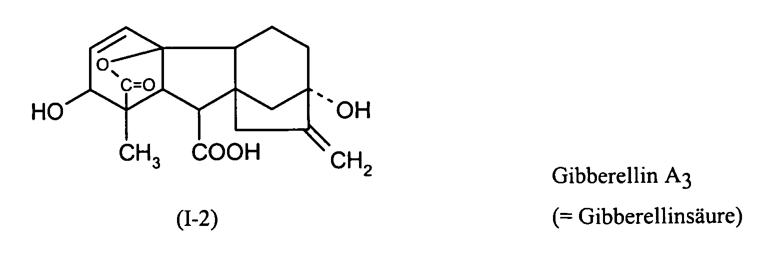 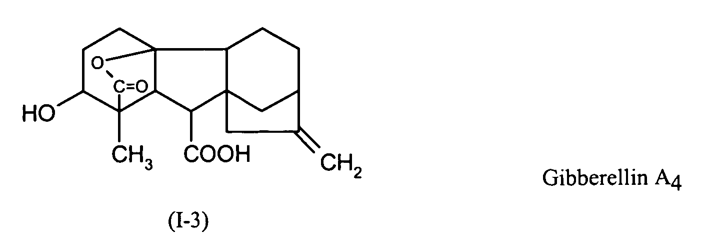 und

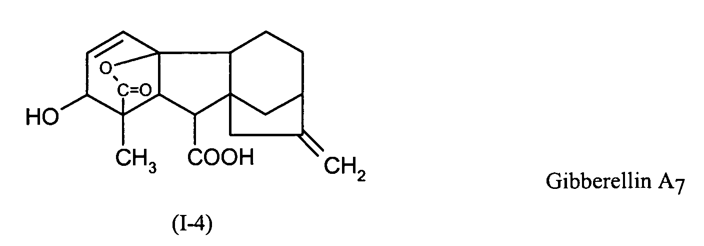

Besonders bevorzugt ist die Gibberellinsäure der Formel (I-2).

Die Gibberelline der Formel (I) sind bekannt (vgl. R. Wegler "Chemie der Pflanzenschutz- und Schädlingsbekämpfungsmittel", Band 2, Springer Verlag, Berlin-Heidelberg-New York, 1970, Seiten 401 - 412).

Die erfindungsgemäß verwendbaren Beizmittel-Formulierungen werden entweder direkt oder nach vorherigem Verdünnen mit Wasser zur Behandlung von Sojasaatgut eingesetzt. Die erfindungsgemäß verwendbaren Beizmittel-Formulierungen oder deren verdünnte Zubereitungen können auch zum Beizen von Saatgut transgener Sojapflanzen eingesetzt werden. Dabei können im Zusammenwirken mit den durch Expression gebildeten Substanzen auch zusätzliche synergistische Effekte auftreten.

Zur Behandlung des Sojasaatguts mit den erfindungsgemäß verwendbaren Beizmittel-Formulierungen oder den daraus durch Zugabe von Wasser hergestellten Zubereitungen kommen alle üblicherweise für die Beizung einsetzbaren Mischgeräte in Betracht. Im einzelnen geht man bei der Beizung so vor, dass man das Saatgut in einen Mischer gibt, die jeweils gewünschte Menge an Beizmittel-Formulierungen entweder als solche oder nach vorherigem Verdünnen mit Wasser hinzufügt und bis zur gleichmäßigen Verteilung der Formulierung auf dem Saatgut mischt. Gegebenenfalls schließt sich ein Trocknungsvorgang an.

Die Aufwandmenge an den erfindungsgemäß verwendbaren Beizmittel-Formulierungen kann innerhalb eines größeren Bereiches variiert werden. Sie richtet sich nach dem jeweiligen Gehalt der Wirkstoffe in den Formulierungen und nach dem Saatgut. Die Aufwandmengen an DMI-Fungiziden oder deren Kombination liegen im Allgemeinen zwischen 0,001 und 50 g pro Kilogramm Saatgut, vorzugsweise zwischen 0,01 und 15 g pro Kilogramm Saatgut.

Die erfindungsgemäß verwendeten Saatgutbeizen lassen sich neben der Bekämpfung von Phakopsora, insbesondere Phakopsora pachyrhizi, beispielsweise zur Bekämpfung von Plasmodiophoromycetes, Oomycetes, Chytridiomycetes, Zygomycetes, Ascomycetes, Basidiomycetes, Deuteromycetes, Pseudomonadaceae, Rhizobiaceae, Enterobacteriaceae, Corynebacteriaceae und Streptomycetaceae einsetzen.

Beispielhaft aber nicht begrenzend seien einige Erreger von pilzlichen und bakteriellen Erkrankungen, die unter die oben aufgezählten Oberbegriffe fallen, genannt:
Xanthomonas-Arten, wie beispielsweise Xanthomonas campestris pv. oryzae;
Pseudomonas-Arten, wie beispielsweise Pseudomonas syringae pv. lachrymans;
Erwinia-Arten, wie beispielsweise Erwinia amylovora;
Phytophthora-Arten, wie beispielsweise Phytophthora sojae;
Pseudoperonospora-Arten, wie beispielsweise Pseudoperonospora humuli oder Pseudoperonospora cubensis;
Peronospora-Arten, wie beispielsweise Peronospora brassicae oder Peronospora manshurica;
Erysiphe-Arten, wie beispielsweise Erysiphe polygoni;
Podosphaera-Arten, wie beispielsweise Podosphaera leucotricha;
Puccinia-Arten, wie beispielsweise Puccinia recondita;
Sclerotinia-Arten, wie beispielsweise Sclerotinia sclerotiorum;
Ustilago-Arten, wie beispielsweise Ustilago nuda oder Ustilago avenae;
Pellicularia-Arten, wie beispielsweise Pellicularia sasakii;
Fusarium-Arten, wie beispielsweise Fusarium culmorum;
Septoria-Arten, wie beispielsweise Septoria nodorum oder septoria glycines;
Leptosphaeria-Arten, wie beispielsweise Leptosphaeria nodorum;
Cercospora-Arten, wie beispielsweise Cercospora kikuchii;
Alternaria-Arten, wie beispielsweise Altemaria brassicae.
Phomopsis Arten, wie beispielsweise Phomopsis longicola; Colletotrichum Arten, wie beispielsweise Celletotrichum truncatum;
Rhizoctoinia Arten, wie beispielsweise Rhicoctoinia solani;
und insbesondere
Microsphera Arten, wie Microsphera manshurica.

Insbesondere eignen sich die erfindungsgemäß eingesetzten Beizmittel zur Bekämpfung des Sojabohnenrosts.

Die erfindungsgemäßen Beizen weisen auch eine sehr gute stärkende Wirkung in Pflanzen auf. Sie eignen sich daher zur Mobilisierung pflanzeneigener Abwehrkräfte gegen Befall durch unerwünschte Mikroorganismen.

Unter pflanzenstärkenden (resistenzinduzierenden) Stoffen sind im vorliegenden Zusammenhang solche Substanzen zu verstehen, die in der Lage sind, das Abwehrsystem von Pflanzen so zu stimulieren, dass die behandelten Pflanzen bei nachfolgender Inokulation mit unerwünschten Mikroorganismen weitgehende Resistenz gegen diese Mikroorganismen entfalten.

Unter unerwünschten Mikroorganismen sind im vorliegenden Fall phytopathogene Pilze und Bakterien zu verstehen. Die erfindungsgemäßen Stoffe können also eingesetzt werden, um Pflanzen innerhalb eines gewissen Zeitraumes nach der Behandlung gegen den Befall durch die genannten Schaderreger zu schützen. Der Zeitraum, innerhalb dessen Schutz herbeigeführt wird, erstreckt sich im allgemeinen von 1 bis 70 Tage, vorzugsweise 1 bis 35 Tage nach Aussaat.

Die Erfindung wird durch die Beispiele näher erläutert, ohne sie darauf zu beschränken.

### Beispiel 1

### Wirkung von Fluquinconazole gegen Phakopsora pachyrhizi

### Beizmittel: Fluquinconazole 25 WPC (wettable powder

Zur Beizung wurde das Saatgut 1 Minute lang mit dem Beizmittel in einem verschlossenen Plastiksack geschüttelt.

Das Saatgut wurde im Feld ausgesät (4 Parzellen, Parzellengröße je 10 m², 40 Samen pro m²) und am Tag nach der Aussaat künstlich beregnet.

### Der natürliche Befall der Kontrolle betrug durchschnittlich 75 %.

Die Wirksamkeit wird in Prozent ausgedrückt. Dabei bedeutet 0 % ein Wirkungsgrad, der dem der Kontrolle entspricht, während ein Wirkungsgrad von 100 % bedeutet, dass kein Befall beobachtet wird.

| Aufwandmenge [g Fluquinconazole / 100 kg Saatgut] | Dauer [Tage] | Wirkungsgrad [%] |
|---|---|---|
| 50 | 22 | 100 |
| 50 | 33 | 100 |
| 50 | 37 | 100 |
| 5 | 28 | 100 |

### Beispiel 2

### Wirkung von Prothioconazole gegen Phakopsora pachyrhizi

### Beizmittel: Prothioconazole

Zur Beizung wurde das Saatgut 1 Minute lang mit dem Beizmittel in einem verschlossenen Plastiksack geschüttelt.

Das Saatgut wurde im Feld ausgesät (4 Parzellen, Parzellengröße je 10 m², 40 Samen pro m²) und am Tag nach der Aussaat künstlich beregnet.

### Der natürliche Befall der Kontrolle betrug durchschnittlich 75 %.

Die Wirksamkeit wird in Prozent ausgedrückt. Dabei bedeutet 0 % ein Wirkungsgrad, der dem der Kontrolle entspricht, während ein Wirkungsgrad von 100 % bedeutet, dass kein Befall beobachtet wird.

| Aufwandmenge [g Prothioconazole / 100 kg Saatgut] | Dauer [Tage] | Wirkungsgrad [%] |
|---|---|---|
| 5 | 28 | 100 |
| 10 | 28 | 100 |

## Patentansprüche

1. Die Verwendung eines oder mehrerer DMI-Fungizide aus der Gruppe:
a) Triazole:
a.1. Azaconazole, a.2. Bitertanol, a.3. Bromuconazole, a.4. Cyproconazole, a.5. Difenoconazole, a.6. Diniconazole, a.7. Epoxiconazole, a.8. Fenbuconazole, a.9. Fluquinconazole, a.10. Flusilazole, a.11. Flutriafol, a.12. Hexaconazole, a.13. Imibenconazole, a.14. Ipconazole, a.15. Metconazole, a.16. Myclobutanil, a.17. Paclebutrazol, a.18. Penconazole, a.19. Propiconazole, a.20. Prothioconazole, a.21. Simeconazole, a.22. Tebuconazole, a.23. Tetraconazole, a.25. Triadimefon, a.26. Triadimenol, a.27. Triticonazole;
b) Pyrimidine:
b.1. Fenarimol, b.2. Nuarimol;
c) Pyridine:
c.1. Pyrifenox;
d) Piperazine:
d.1. Triforine
und
e) Imidazole:
e.1. Imazalil, e.2. Oxpoconazole Fumarat, e.3. Peforazoate, e.4. Prochloraz, e.5. Triflumizole,
als Saatgutbeize für Soja gegen Sojabohnenrost.

2. Verwendung nach Anspruch 1 mit einem DMI-Fungizid aus der Gruppe Fluquinconazole, Prothioconazole und Triticonazole.

3. Verfahren zum Schutz von Sojapflanzen gegen Sojabohnenrost, wobei man Saatgut der Pflanzen mit einem oder mehreren DMI-Fungiziden aus der Gruppe a - e gemäß Anspruch 1 behandelt.

4. Verfahren nach Anspruch 3, wobei man ein oder mehrere DMI-Fungizide aus der Gruppe Fluquinconazole, Prothioconazole und Triticonazole einsetzt.

5. Die Verwendung eines oder mehrerer DMI-Fungizide aus der Gruppe:
a) Triazole:
a.1. Azaconazole, a.2. Bitertanol, a.3. Bromuconazole, a.4. Cyproconazole, a.6. Diniconazole, a.7. Epoxiconazole, a.8. Fenbuconazole, a.9. Fluquinconazole, a.10. Flusilazole, a.11. Flutriafol, a.12. Hexaconazole, a.13. Imibenconazole, a.14. Ipconazole, a.15. Metconazole, a.16. Myclobutanil, a.17. Paclebutrazol, a.18. Penconazole, a.19. Propiconazole, a.20. Prothioconazole, a.21. Simeconazole, a.22. Tebuconazole, a.25. Triadimefon, a.26. Triadimenol, a.27. Triticonazole;
b) Pyrimidine:
b.1. Fenarimol, b.2. Nuarimol;
c) Pyridine:
c.1. Pyrifenox;
d) Piperazine:
d.1. Triforine
und
e) Imidazole:
e.1. Imazalil, e.2. Oxpoconazole Fumarat, e.3. Peforazoate, e.4. Prochloraz, e.5. Triflumizole,
als Saatgutbeize für Soja gegen Sojabohnenrost.

6. Verwendung nach Anspruch 5 mit einem DMI-Fungizid aus der Gruppe Fluquinconazole, Prothioconazole und Triticonazole.

7. Verfahren zum Schutz von Sojapflanzen gegen Sojabohnenrost, wobei man Saatgut den Pflanzen mit einem oder mehreren DMI-Fungiziden aus der Gruppe a - e gemäß Anspruch 5 behandelt.

8. Verfahren nach Anspruch 7, wobei man ein oder mehrere DMI-Fungizide aus der Gruppe Fluquinconazole, Prothioconazole und Triticonazole einsetzt.

9. Sojasaatgut, behandelt und/oder beschichtet mit einem oder mehreren DMI-Fungiziden aus der Gruppe a - e gemäß Anspruch 5.

10. Sojasaatgut gemäß Anspruch 9, behandelt und/oder beschichtet mit einem DMI-Fungizid aus der Gruppe Fluquinconazole, Prothioconazole und Triticonazole.
